# EUROPÄISCHE PATENTANMELDUNG

(11) **EP 1 967 308 A1**
(43) Veröffentlichungstag der Anmeldung: **10.09.2008**
(21) Anmeldenummer: 08000032.6
(22) Anmeldetag: 03.01.2008
(51) Int. Cl.: B23D 35/00

(54) **Vorrichtung zum Ein- und Ausbau eines Messers einer Schrottschere**

(30) Priorität: 03.03.2007 DE 102007010366
(71) Anmelder: Metso Lindemann GmbH, 40231 Düsseldorf (DE)
(72) Erfinder: Schaaf, Michael, 42699 Solingen (DE); Fischer, Walter, 41468 Neuss (DE)
(74) Vertreter: Becker, Thomas

(57) **Zusammenfassung**

Vorrichtung zum Ein- und Ausbau eines Messers (30u,30o) einer Schrottschere, mit folgenden Merkmalen:
1.1 einem bewegbaren Wagen (10),
1.2 mindestens einem am Wagen (10) verstellbar befestigten Greifarm (22),
1.3 mindestens zwei vom Greifarm (22) oder den Greifarmen abstehenden, im Abstand zueinander angeordneten Bolzen (26), wobei
1.4 mindestens ein Vorrichtungsteil aus der Gruppe: Wagen (10), Greifarm(e) (22), Bolzen (26) so ausgelegt und angeordnet ist, dass die Bolzen (26) in alle drei Richtungen des Koordinatensystems bewegbar sind.

## Beschreibung

Die Erfindung betrifft eine Vorrichtung zum Einbau und Ausbau eines Messers einer Schrottschere.

Der grundsätzliehe Aufbau einer Schrottschere ergibt sich aus der DE 42 00 013 C2, auf deren Offenbarung Bezug genommen wird. Für die nachstehend beschriebene Erfindung sind folgende Vorrichtungsteile wichtig:
- Ein, Obermesser, welches an einem Träger befestigt ist. Das Obermesser ist meist so angeordnet, dass seine Schneidkante unter einem Winkel zur. Horizontalen verläuft um zusammen mit dem Untermesser einen ziehenden Schnitt" zu ermöglichen.
- Ein Untermesser, welches ebenfalls an einem Träger befestigt ist. Dieser Träger ist in der Regel nicht beweglich, die Schneidkante des Untermessers verläuft häufig horizontal.

Durch alternierende Bewegungen des Obermessers wird Schrott zwischen Ober- und Untermesser geschnitten, wobei die Schnittlänge über den Schrottvorschub einstellbar ist.

Beide Messer unterliegen einem erheblichen Verschleiß. Sie müssen dann ausgebaut, nachbearbeitet oder ersetzt und wieder eingebaut werden.

Um den Ein- und Ausbau zu erleichtern ist es aus der DE 42 00 013 C2 bekannt, die Messer mit Bohrungen auszubilden, die der Aufnahme von Befestigungsschrauben dienen. Die Bohrungen erstrecken sich teilweise in benachbarter Futterstücke und teilweise durch die zugehörigen Messerträger. Dadurch werden zugehörige Befestigungsmittel von außen zugänglich und können beispielsweise mit Spannmitteln versehen werden, wie in der DE 42 00 013 C2 erläutert.

Dieser Stand der Technik offenbart auch eine Einrichtung, mit der die Messer ein- beziehungsweise ausgebaut werden konnen. Die bekannte. Einrichtung besteht im Wesentlichen aus einer Trageinrichtung, die an einem Kran geführt wird, wobei die Trageinrichtung endseitig Tragbolzen aufweist, die in die vorstehend erwähnten Bohrungen der Messer: (gegebenenfalls einschließlich benachbarter Fütterstucke) bei der Montage ein- oder herausgeführt werden. Wegen weiterer Einzelheiten wird auf die Beschreibung der DE 42 00013 C2 Bezug genommen.

Die bekannte Einrichtung hat sich grundsätzlich bewährt. Ein gewisser Nachteil besteht darin, dass die Aufhängung der Trageinrichtung an einem Kran manchmal Probleme der exakten Justierung der Tragbolzen in den zugehörigen Bohrungen beziehungsweise bei der Justierung der Messer selbst bereitet.

Der Erfindung liegt deshalb die Aufgabe zu Grunde, eine Vorrichtung zum Ein- und Ausbau eines Messers einer Schrottschere bereitzustellen, die eine höhere Präzision bei der Aufnahme der Messer und deren Montage erlaubt.

Die Erfindung hält im Wesentlichen am Prinzip einer Trageinrichtung mit Tragbolzen fest, zumal damit die erfindungsgemäße Vorrichtung auch an bestehenden Anlagen benutzt werden kann.

Anstelle einer Aufhängung der Trageinreichung an einem Kran ist die Vorrichtung so konzipiert, dass alle Montageteile unmittelbar oder mittelbar an einem Wagen befestigt sind. Ein solcher Wagen bietet durch seine Auflage/Verfahrbarkeit auf einem Untergrund eine deutlich höhere Stabilität gegenüber einem Hängekran. Darüber hinaus ist vorgesehen, die bekannte gerustartige Trageinrichtung durch einen Greifarm zu ersetzen, der verstellbar am Wagen befestigt ist und von dem mindestens zwei Bolzen abstehen, die den bekannten Traggbolzen entsprechen

Um die Tragbolzen in jede gewünschte (und notwendige) Position bei der Montage eines Messers zu bringen, ist erfindungsgemäß vorgesehen, dass mindestens einer der Vorrichtungsteile : Wagen, Greifarme, Bolzen so ausgelegt und angeordnet ist, dass die Bolzen in alle drei Richtungen des Koordinatensystems an die gewünschte Stelle bewegbar sind.

Mit anderen Worten: Die gewünschte Bewegbarkeit kann bereits durch den Wagen selbst, zumindest teilweise, bereitgestellt werden Dazu kann der Wagen verfahrbar sein, auch in unterschiedlichen Richtungen. Er kann ebenfalls höhenverstellbar sein, wie dies beispielsweise nach einer Ausführungsform vorgesehen ist, bei der ein Rangierheber als Wagen dient.

In ihrer allgemeinsten Ausführungsform betrifft die Erfindung eine Vorrichtung zum Ein- und Ausbau eines Messers einer Schrottschere mit folgenden Merkmalen:
a) einem bewegbaren Wagen
b) mindestens einem am Wagen verstellbaren befestigten Greifarm
c) mindestens zwei vom Greifarm oder den Greifarmen abstehenden, im Abstand zueinander angeordneten Bolzen, wobei
d) mindestens ein Vorrichtungsteil aus der Gruppe: Wagen, Greifarme, Bolzen so ausgelegt und angeordnet ist, dass die Bolzen in alle drei Richtungen des Koordinatensystems bewegbar sind.

Die Bewegbarkeit kann alternativ oder kumulativ über einen oder mehreren Greifarme erfolgen, die am Wagen befestigt sind. Eine erste Fallvariante besteht darin, mindestens einen Greifarm gekrümmt, beispielsweise L-förmig oder biegbar, beispielsweise gelenkig, auszuführen, um so über eine entsprechende Steuerung die Bolzen, die beispielsweise am Ende eines solchen Greifarms befestigt sind, in die gewünschte Position zu verfahren.

Schließlich können auch die Bolzen selbst in bestimmten Richtungen bewegbar sein, beispielsweise dann, wenn Sie an einer Traverse befestigt sind, die gelenkig und/oder drehbar mit mindestens einem Greifarm verbunden ist.

Auf diese Weise ähnelt die erfindungsgemäße Vorrichtung funktionell einer Vorrichtung, wie sie zur Konfektionierung von Hochregallagern bekannt ist. Über entsprechende Regelungs-/Steuerungsprogramme werden einzelne Waren automatisch an eine Lagerstelle verfahren, um sie dort abzulegen beziehungsweise aus vorgewählten Positionen über ein verfahrbares Gerät entnommen.

Die erfindungsgemäße Vorrichtung ist so ausgelegt, dass die Bolzen in korrespondierenden Öffnungen (Bohrungen) des Ober-beziehungsweise Untermessers einsetzbar sind. Sinnvollerweise sind deshalb mindestens zwei Bolzen für zwei Bohrungen in einem Messer vorgesehen

Um sicherzustellen, dass aufgenommene Messer nicht abrutschen, sieht die Erfindung in einer Ausführungsform vor, die Bolzen mit Rastmitteln zur Befestigung der Messer der Schrottschere auszubilden. Diese Rastmittel können Bohrungen in dem Bolzen sein, durch die Arretierstifte gesteckt werden. Die Rastmittel können aber auch reibschüssige Abschnitte auf dem Bolzen sein, beispielsweise eine Membran, die von außen unter Druck gesetzt werden kann, um sie radial aufzuwölben, während durch Ablassen des Überdruckes der Bolzenquerschnitt an dieser Stelle wieder verringert wird, um das transportierte Bauteil abnehmen zu können.

Die Bolzen können aber müssen nicht parallel ausgerichtet sein. Dies gilt auch für ihre horizontale Orientierung. Die Bolzen werden aber, jeder für sich, üblicherweise horizontal vom zugehörigen Greifarm abstehen, da die Messer und Futterstücke üblicherweise Bohrungen aufweisen, die im rechten Winkel zu den Messerflächen verlaufen, in die sie sich öffnen Dabei muss das Messer selbst nicht unbedingt eine Quadeform aufweisen, wie Figur 11 der DE, 42 00 013 C2 zeigt.

Die Positionierung der Bolzen und/oder der auf die Bolzen aufgesteckten Messer kann über Sensoren unterstützt werden, beispielsweise optische Sensoren. In der Regel wird es allerdings genügen, wenn die Positionierung durch das Bedienungspersonal visuell erfolgt.

Weitere Merkmale der Erfindung können den Merkmalen der Unteransprüche sowie den übrigen Beschreibungsunterlagen entnommen werden.

Die Erfindung wird nachstehend anhand eines. Ausführungsbeispiels näher erläutert. Dabei zeigen, jeweils in stark schematisierter Darstellung,
- Figur 1:: Eine Seitenansicht einer erfindungsgemäßen Vorrichtung
- Figur 2:: Eine mögliche Anordnung der Bolzen über eine Traverse an einem Greifarm
- Figur3:: Eine Frontansicht der Vorrichtung nach Figur 1.
- Figur 4:: Einen Vertikalschnitt durch eine Schrottschere während des Ausbaus des Untermessers.

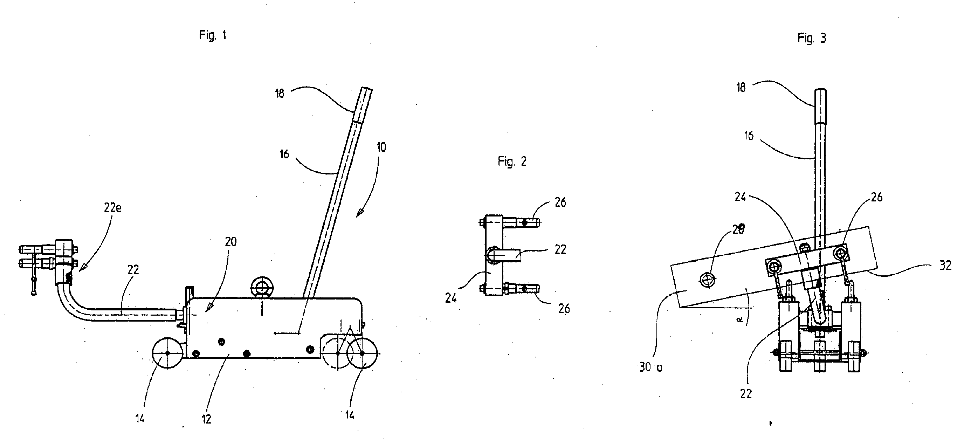

Figur 1 zeigt einen als Rangierheber ausgebildeten Wagen 10. Der Wagen 10 umfasst ein Chassis 12, welches mit Rädern 14 ausgerüstet ist, um den Wagen 10 in beliebiger Richtung auf einem Untergrund verfahren zu können. An einem Ende (in der Figur rechts) ragt ein Hebel 16 aus dem Chassis 12. Der Hebel 16 besitzt einen Bedienungskopf 18, der eine Menüführung aufweist, um den Wagen 10 zu bewegen beziehungsweise die nachfolgenden Betätigungsschritte einzustellen und auszuüben

Am gegenüberliegenden (in der Figur linken) Ende des Wagens 10 ist ein Dreh-/Schwenklager 20 wagenseitig montiert, von dem ein L-förmig gekrümmter Greifarm 22 verläuft. Der Greifarm 22 ist entlang des Lagers 20 höhenverstellbar und drehbar angeordnet.

Am freien Ende 22e ist, wie die Figuren 2 und 3 zeigen, eine Traverse 24 am Greifarm 22 angeordnet, von der zwei Bolzen. 2,6 so abstehen, dass die Bolzen 26 exakt horizontal (senkrecht zur Zeichenebene in Figur 3) verlaufen.

Die Größe (Länge, Durchmesser) jedes Bolzens 26 und der Abstand der Bolzen zueinander ist so gewählt, dass er dem Abstand korrespondierender Bohrungen 28 eines zugehörigen Messers 30 entspricht, wie dies am Beispiel eines Obermessers 30o in Figur 3 schematisch angedeutet ist.

Das Obermesser 30o nach Figur 3 besitzt drei Bohrungen 28, von denen zwei (in der Figur: die beiden rechten) dem Eingriff mit des Bolzen 26 dienen.

Figur 3 lässt weiter erkennen, dass das Obermesser 30o unter einem Winkel α zur Horizontalen schräg gestellt ist, so dass die Schneidkante 32 einen ziehenden Schnitt mit einer zugehörigen Schneidkante eines horizontal verlaufenden Untermessers 30u ausführen kann.

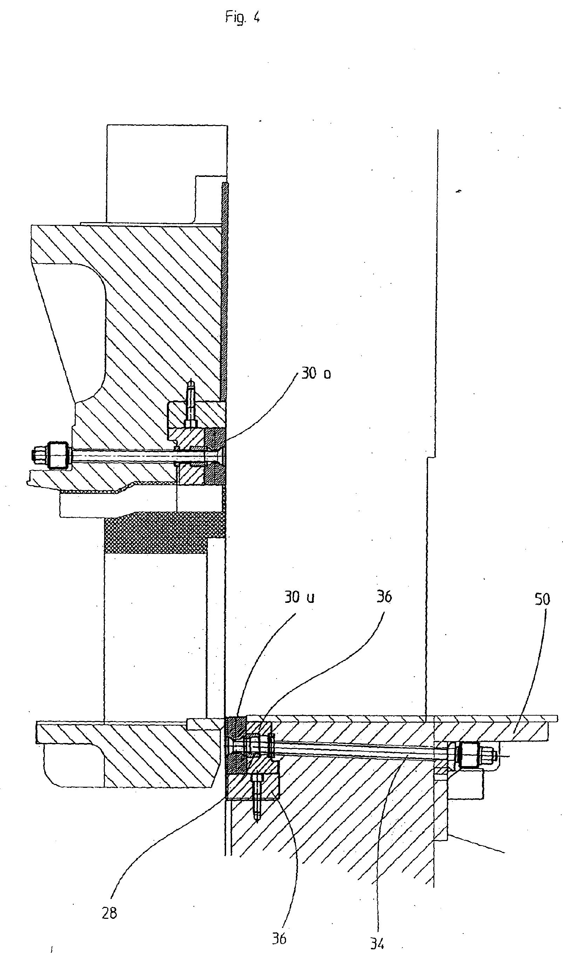

Gemäß Figur 4 ist der Wagen 10 entlang eines Bodens 50 in Richtung auf das Untermesser 30u der Schrottschere bewegt worden. Über den Betätigungskopf 18 wird der Greifarm 22 in eine Position verschwenkt, bei der sein freies Ende 22e nach unten zeigt. Im nächsten Schritt wird die Traverse, die drehbar auf dem freien. Ende 22e des Greifarms 22 geführt ist, um 180° (gegenüber der Position in Figur 1) gedreht, so dass die freien Enden der Bolzen 26 in Richtung auf korrespondierende Bohrungen 28 des Untermessers 30u weisen. Im nächsten Schritt werden Befestigungsschrauben 34, mit denen das Untermesser 30u befestigt ist, gelöst und entnommen. Danach wird der Wagen 12 zurückgefahren, bis die Bolzen 26 in die korrespondierenden Bohrungen 28 des Untermessers 30u eingreifen. Der Greifarm 22 wird anschließend entlang des Gelenks 20 ein Stück angehoben und damit auch das Untermesser 30u, das sich so aus den benachbarten Futterstücken 36 lösen lässt.

Um ein Abrutschen des Messers 30u von den Bolzen 26 zu vermeiden, können die vorstehend beschriebenen Sicherungsmittel aktiviert werden. Danach kann der Greifarm nach oben (wie in Figur 1 dargestellt) verschwenkt und der Wagen 10 mit dem Untermesser 30u weggefahren werden.

Die Entnahme des Untermessers 30u vom Wagen 10 erfolgt umgekehrt wie vorstehend beschrieben. Anschließend kann ein neues Untermesser 30u aufgesetzt und in umgekehrter Reihenfolge wie vorstehend beschrieben montiert werden.

Analog gilt dies auch für die Montage/Demontage des Obermessers 30o, wobei jedoch darauf zu achten ist, dass mindestens eine Befestigungsschraube 34 für das Obermesser 30o solange in ihrer Fixierposition verbleibt, bis die Bolzen 26 sicher in den Bohrungen 28 des Obermessers 30o eingeführt sind, um ein Herabfallen des Obermessers 30o zu vermeiden.

Die Vorrichtung ermöglicht es mit einfachen Mitteln, Ober- und Untermesser einer Schrottschere schnell und präzise einzubauen beziehungsweise auszubauen Durch die beschriebene Verschiebbarkeit des Wagens 10 sowie die Höhenverstellung und Drehbarkeit des Greifarms 22 ist sichergestellt, dass die Bolzen 26 an jede beliebige (gewünschte) Position bewegt werden können. Die Bolzen 26 sind damit in alle drei Richtungen des Koordinatensystems verstellbar angeordnet.

Auf Grund des nicht unerheblichen Gewichtes der Messer (üblicherweise ca. 50-100 kg.) ist der Wagen 10 entsprechend zu dimensionieren, um ein unbeabsichtigtes Wegkippen zu vermeiden, sobald das Messer auf den Bolzen aufsitzt. In diesem Sinne ist es zweckmäßig, den Greifarm 22 kurz zu gestalten. Die beweglichen Teile des Wagens 10 können hydraulisch, pneumatisch oder elektrisch aktiviert werden. Selbstverständlich umfasst die erfindungsgemäße Vorrichtung auch manuell verstellbare Bauteile

## Patentansprüche

1. Vorrichtung zum Ein- und Ausbau eines Messers (30u, 30o) einer Schrottschere, mit folgenden Merkmalen:
1.1 einem bewegbaren Wagen (10),
1.2 mindestens einem am Wagen (10) verstellbar befestigten Greifarm (22),
1.3 mindestens zwei vom Greifarm (22) oder den Greifarmen abstehenden, im Abstand zueinander angeordneten Bolzen (26), wobei
1.4 mindestens ein Vorrichtungsteil aus der Gruppe: Wagen (10), Greifarm(e) (22), Bolzen (26) so ausgelegt und angeordnet ist, dass die Bolzen (26) in alle drei Richtungen des Koordinatensystems bewegbar sind.

2. Vorrichtung nach Anspruch 1 mit einem als Rangierheber ausgebildeten Wagen (10).

3. Vorrichtung nach Anspruch 1 mit mindestens einem gekrümmten Greifarm (22).

4. Vorrichtung nach Anspruch 1 mit Bolzen (26), die von einer Traverse (24) abstehen, die an mindestens einem Greifarm (22) befestigt ist.

5. Vorrichtung nach Anspruch 4, bei der die Traverse (24) drehbar am Greifarm (22) befestigt sind.

6. Vorrichtung nach Anspruch 1 , bei der die Bolzen (26) parallel ausgerichtet sind.

7. Vorrichtung nach Anspruch 1 , bei der die Bolzen (26) ortsfest an mindestens einem Greifarm (22) oder einer am Greifarm (22) angeschlossenen Traverse (24) befestigt sind.

8. Vorrichtung nach Anspruch 1, bei der die Bolzen (26) mit Rastmitteln zur Befestigung des Messers (30o, 30u) der Schrottschere ausgebildet sind.

9. Vorrichtung nach Anspruch 1 mit einem auf einem Boden (50) verfahrbaren Wagen (10).

10. Vorrichtung nach Anspruch 1, bei der eine Positionierung der Bolzen (26) über Sensoren steuerbar ist.

11. Vorrichtung nach Anspruch 1, bei der der/die Greifarm(e) (22) gelenkig am Wagen (10) geführt sind.

12. Vorrichtung nach Anspruch 1, bei der der/die Greifarm(e) (22) höhenverstellbar am Wagen (10) geführt sind.
